# FASCICULE DE BREVET EUROPEEN

(11) **EP 2 298 590 B1**
(45) Date de publication et mention de la délivrance du brevet: **04.11.2015**
(21) Numéro de dépôt: 10175043.8
(22) Date de dépôt: 02.09.2010
(51) Int. Cl.: B60N 2/015, B60N 2/07, B60N 2/08

(54) **Dispositif d'ancrage de siège amovible de véhicule automobile**
Verankerungsvorrichtung für herausnehmbaren Sitz eines Kraftfahrzeugs
Anchoring device for a removable automobile seat

(30) Priorité: 21.09.2009 FR 0956464
(43) Date de publication de la demande: 23.03.2011
(73) Titulaire: GRUPO ANTOLIN-INGENIERIA, S.A., 09080 Burgos (ES)
(72) Inventeur: Duchateau, Jean, 43330 PONT SALOMON (FR); Aissou, Abdenacer, 69340 FRANCHEVILLE (FR); Decombe, François, 42290 SORBIERS (FR); Viode, Pierre-Jean, 43200 YSSINGEAUX (FR)
(74) Mandataire: Delorme, Nicolas

(56) Documents cités:
- EP-A1- 1 176 047
- FR-A1- 2 776 582
- FR-A1- 2 777 048

## Description

La présente invention concerne un dispositif d'ancrage de siège amovible de véhicule automobile.

Certains véhicules automobiles sont dotés de sièges amovibles qui peuvent être retirés du véhicule pour créer un plancher plan.

Par siège, on entend un équipement ayant un piétement sur lequel sont placés une assise et un dossier pouvant recevoir un, deux, trois, voire quatre passagers selon la largeur de l'assise et du dossier.

Dans certaines configurations, il est possible de disposer les sièges en vis-à-vis.

En plus d'être amovibles, de nombreux véhicules proposent une possibilité de réglage de la position longitudinale du siège.

On connaît par le document EP-A-1176047 un dispositif d'ancrage qui permet de fixer un siège dans des glissières.

Ce dispositif d'ancrage est satisfaisant sur de nombreux points mais il exige des glissières de forte inertie pour encaisser les forces liées notamment à un accident.

Ce dispositif d'ancrage est de plus dédié à un type de siège.

Le document FR 2 777 048 décrit un dispositif d'ancrage selon le préambule de la revendication 1.

Un objet de l'invention est de proposer un dispositif d'ancrage de siège qui puisse coopérer avec des glissières plus légères que celles coopérant avec les dispositifs de l'art antérieur et, de plus, qui puissent être facilement paramétré en fonction de différents types de siège.

L'invention concerne ainsi un dispositif d'ancrage selon la revendication 1.

Ainsi l'invention propose un dispositif d'ancrage qui répartit les efforts de retenue de manière symétrique sur les deux ailes d'ancrage de la glissière. De plus, le dispositif peut être paramétré de manière simple en fonction des charges que doit subir un siège. Le dispositif d'ancrage selon l'invention peut être équipé d'un plus ou moins grand nombre de verrous en fonction des paramètres du siège tels que ceinture embarquée ou non, siège de rang 1, 2 ou 3 etc.

Selon d'autres dispositions du siège selon l'invention :
- l'actionneur présente un axe de rotation et une première et une seconde tige parallèle audit axe de rotation et qui lui sont reliées rigidement, la première tige venant se placer contre la partie proximale de la queue de commande des verrous de la première série de verrous et la seconde tige venant se placer contre la partie distale de la queue de commande de la seconde série de verrous,
- le dispositif d'ancrage comprend un verrou de rattrapage de jeu possédant un alésage oblong lui permettant une course dans une direction verticale,
- le verrou de rattrapage de jeu comprend un épaulement contre lequel vient s'appuyer une came lorsque la première et la seconde séries de verrous atteignent l'état engagé,
- la came est assujettie à une bague présentant un méplat contre lequel vient en appui un méplat complémentaire ménagé dans l'actionneur lorsque la première et la seconde série de verrous atteignent l'état engagé,
- le dispositif d'ancrage présente une tête destinée à coopérer avec un taquet excentrique embarqué sur l'actionneur en vue de bloquer l'actionneur dans l'état rétracté des verrous et présente un talon conçu pour faire pivoter l'organe de détection lors de l'accostage du dispositif d'ancrage contre une aile d'ancrage de la glissière et pour faire échapper la tête du taquet excentrique,
- les crochets d'ancrage d'au moins une série de verrous présentent, à leur extrémité, un doigt apte à s'insérer dans une ouverture pratiquée dans une paroi de la glissière.

L'invention concerne également un siège de véhicule **caractérisé en ce qu**'il comprend deux dispositifs d'ancrage placés en tandem, tels que précédemment décrits, sur au moins un des flasques longitudinaux du siège.

Selon une disposition de ce siège, une tringle relie les actionneurs des deux dispositifs placés en tandem.

Pour sa bonne compréhension, l'invention est décrite en référence au dessin ci annexé représentant, à titre d'exemples non limitatifs, deux dispositifs selon l'invention équipant un siège automobile.
Figure 1 est une vue partielle d'un siège équipé de deux dispositifs d'ancrage selon l'invention disposés en tandem,
Figures 2 et 3 sont des vues en perspective du dispositif d'ancrage positionné à l'arrière du siège selon deux angles différents,

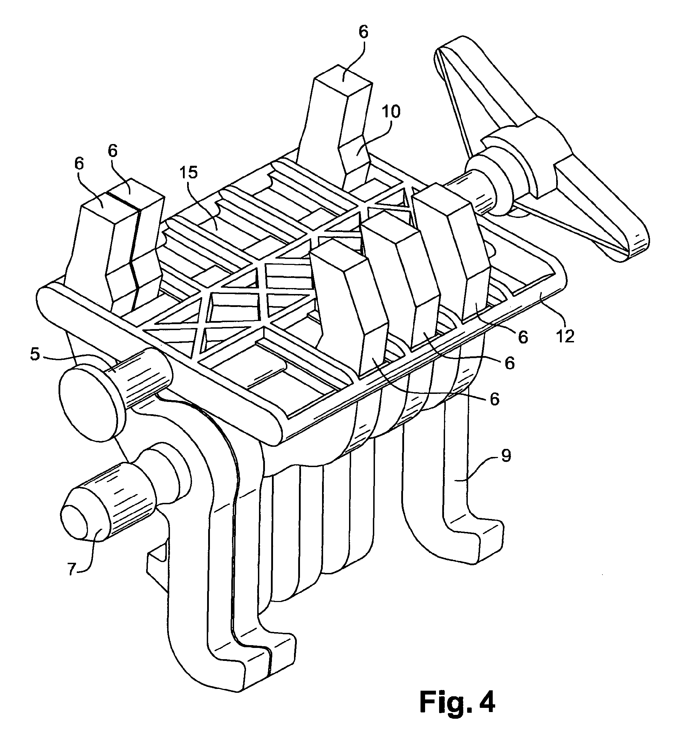

Figure 4 est une vue en perspective du dispositif d'ancrage équipant l'avant du siège,
Figure 5 est une vue en perspective d'un actionneur du dispositif d'ancrage,
Figures 6 montre, en vue de face, le dispositif d'ancrage engagé sur une glissière,
Figures 7 à 9 montrent en coupe la fonction de rattrapage de jeu.

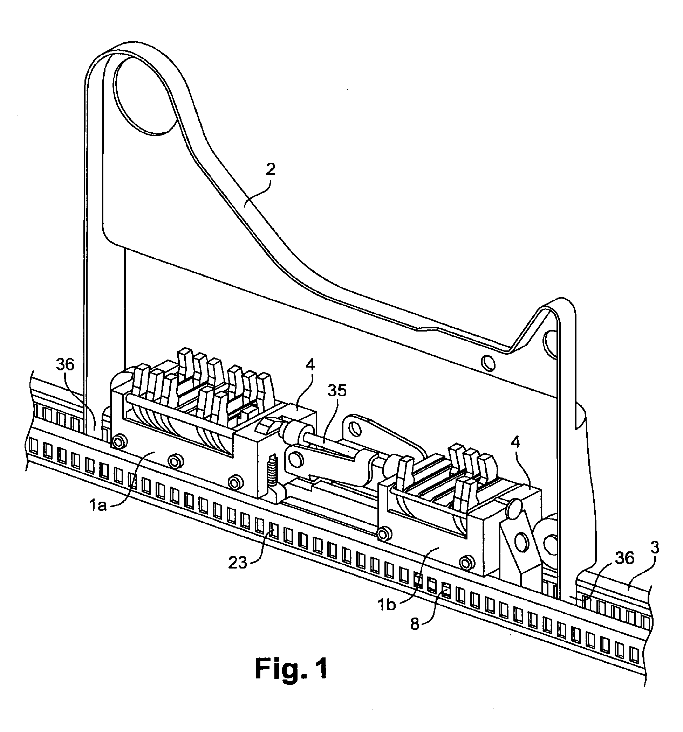

La figure 1 représente partiellement un siège de véhicule automobile. Ce siège est ainsi représenté uniquement par son flasque latéral 2. Dans l'exemple représenté, le siège reçoit deux dispositifs d'ancrage 1a et 1 b. Ces deux dispositifs d'ancrage 1 a et 1 b ont pour fonction d'assujettir le siège à une glissière 3 qui est elle-même fixée dans le plancher d'un véhicule automobile.

De façon classique, un véhicule automobile est équipé de deux glissières 3 parallèles tandis que le siège reçoit deux dispositifs d'ancrage 1a et 1 b susceptibles d'être montés en tandem sur l'un ou sur les deux côtés du siège. Le siège peut présenter deux flasques longitudinaux placés de chaque coté. Dans le cas d'une banquette, il est possible de prévoir deux à quatre flasques.

Par souci de simplification, les éléments communs aux dispositifs d'ancrage arrière et avant 1 a et 1 b portent les mêmes références.

Chacun de ces deux dispositifs d'ancrage présente une forme généralement parallélépipédique définie par un carter 4.

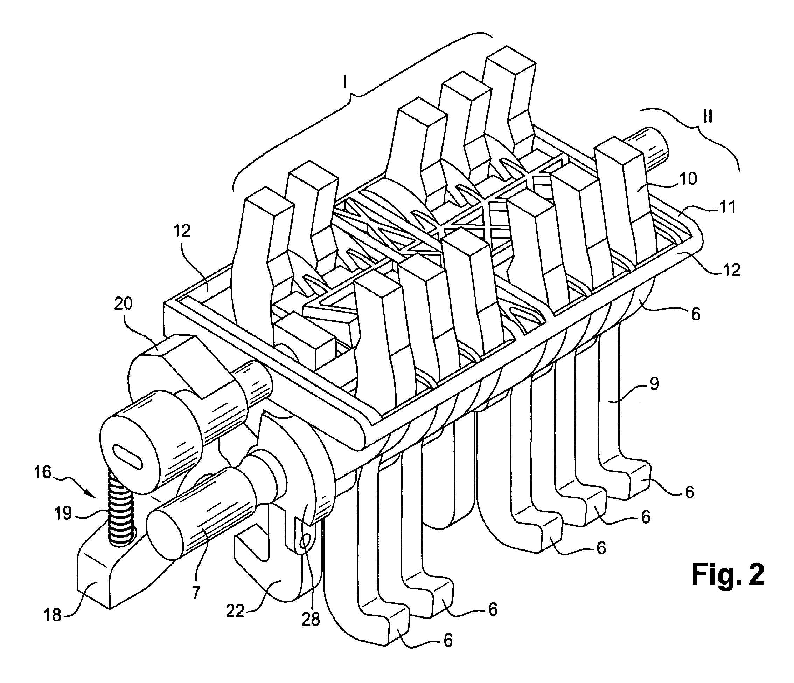

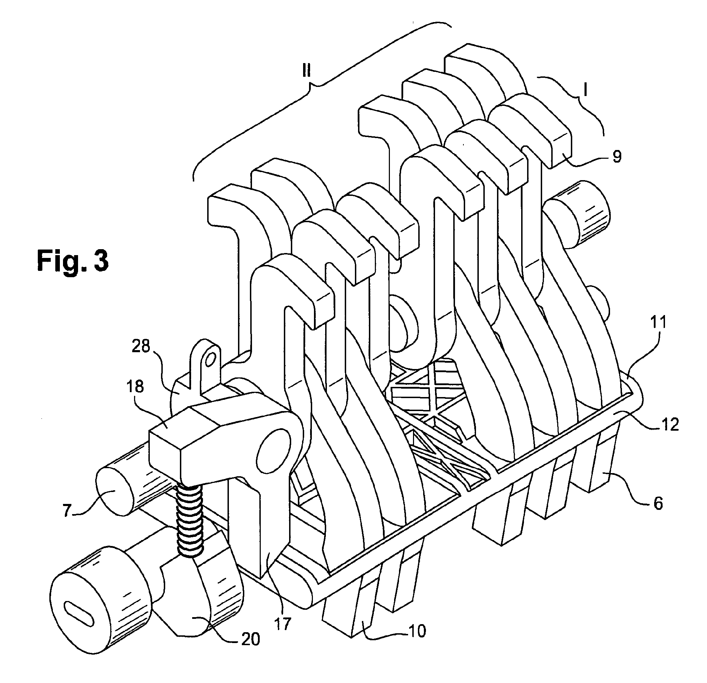

Les figures 2 et 3 montrent le dispositif d'ancrage isolé du siège, le carter 4 de chaque dispositif d'ancrage ayant été ôté.

Le dispositif d'ancrage possède deux séries I et II de plusieurs verrous d'ancrage 6. Dans l'exemple illustré, ces deux séries I et II de six verrous 6 (figure 2) ou de trois verrous 6 (figure 3) sont montées sur un arbre 7 qui est fixé sur le carter 4 du dispositif d'ancrage.

La première série de verrous 6 est mobile en rotation dans un premier sens, tandis que la seconde série de verrous 6 est mobile dans un second sens.

Les deux séries I et II de verrous 6 sont imbriquées de telle sorte que deux verrous 6 successifs sont mobiles dans des sens opposés.

Des moyens élastiques tels que des ressorts sollicitent les verrous 6 de chaque séries I et II dans des directions opposées vers un état engagé dans lequel deux verrous 6 successifs s'écartent l'un de l'autre à la manière de deux lames de ciseaux.

On peut voir que chaque verrou 6 comprend un crochet d'ancrage 9 et une queue de commande 10 séparés par perçage. Les verrous 6 sont aussi successivement montés sur l'arbre 7. En pratique les verrous 6 peuvent être identiques ce qui simplifie la gestion industrielle; deux verrous 6 adjacents sont ainsi engagés sur l'arbre 7 en sens opposé.

La queue de commande 10 possède une forme générale arquée et présente, comme cela va apparaître plus loin, deux zones fonctionnelles à savoir une partie proximale 10a et une partie distale 10b.

Certains verrous 6 sont pourvus de doigts 8 disposés à l'extrémité de leur crochet d'ancrage 9. Les verrous 6 équipés de doigt 8 sont de préférence situés dans le dispositif d'ancrage avant 1 b.

Les deux séries I et II de verrous 6 sont commandées par un actionneur 11. L'actionneur 11 a pour fonction de commander la rotation de la première série de verrous 6 et de la deuxième série de verrous 6 entre une position engagée dans laquelle les verrous 6 de chacune des séries I et II s'écartent les uns des autres et une position rétractée des verrous 6 dans laquelle au contraire les verrous 6 se rapprochent les uns des autres.

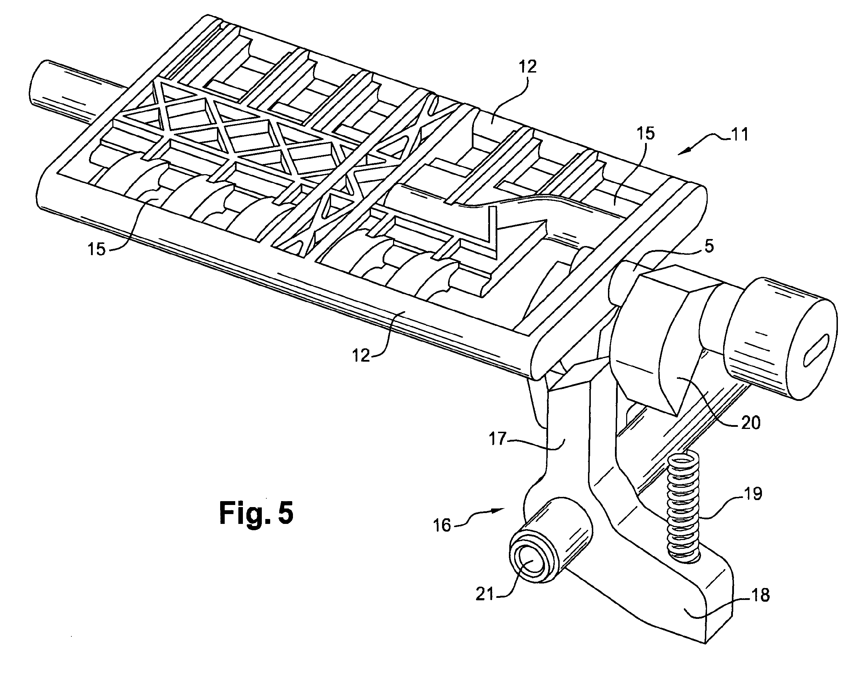

Pour cela, comme on peut le voir plus particulièrement à la figure 5, l'actionneur 11 est une pièce mobile qui possède un axe de rotation 5 qui est parallèle et est superposé à l'arbre 7 sur lequel les verrous 6 sont montés. Le carter 4 est doté de portées sur lesquelles l'arbre 7 et l'axe de rotation 5 peuvent tourner.

L'actionneur 11 présente une structure ajourée comprenant deux séries d'ouvertures 15 ; les ouvertures 15 sont bordées par deux tiges 12 qui sont parallèles à l'axe de rotation de l'actionneur 11 et sont reliées de manière fixe à celui-ci.

La particularité de l'actionneur 11 est que les queues de commande 10 des verrous 6 sont engagées dans les ouvertures 15.

En d'autres termes, comme on peut le voir sur les figures 2 ou 3 par exemple, l'actionneur 11 est positionné par rapport aux deux séries I et II de verrous 6, de telle sorte que son axe de rotation se trouve entre les queues de commande 10 de chacune des séries I et II de verrous 6, tandis que ses deux tiges 12 encadrent respectivement les queues de commande 10 de chacune des séries I et II de verrous 6.

Ainsi, une action sur l'actionneur 11 pour le mettre en rotation fait que chacune des tiges 12 de l'actionneur 11 vient appuyer sur la queue de commande 10 des verrous 6 de chacune des deux séries I et II produisant ainsi une rotation simultanée de la première série de verrous 6 ou de la deuxième série de verrous 6 dans des sens opposés. En pratique, lors de la rotation de l'actionneur 11, une tige 12 vient s'appuyer sur la partie proximale 10a de la queue de commande d'une série de verrous tandis que l'autre tige 12 vient s'appuyer sur la partie distale 10b de l'autre série de verrous 6.

La figure 2 montre le dispositif d'ancrage 1a qui est positionné de préférence à l'arrière du siège.

Dans sa partie arrière, le dispositif d'ancrage 1a possède une fonction supplémentaire, à savoir, une fonction de détection de la présence de la glissière 3 qui est plus particulièrement illustrée à la figure 5.

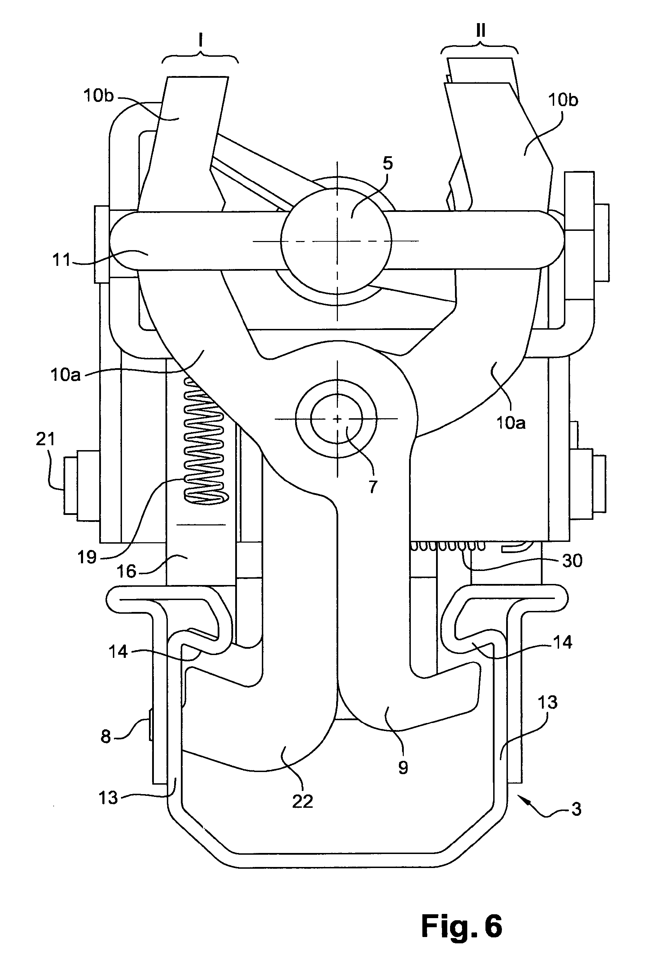

Le siège, par l'intermédiaire de ses deux dispositifs d'ancrage 1a et 1 b, est destiné à venir se fixer sur une glissière 3 que l'on peut voir en perspective à la figure 1 et en coupe transversale, par exemple à la figure 6.

Cette glissière 3 présente une forme générale en U avec deux parois latérales parallèles et une première et une seconde aile d'ancrage 14 qui surmontent respectivement la première et seconde paroi 13.

Les deux ailes d'ancrage 14 débordent vers l'intérieur de la glissière 3 et forment ainsi un retour contre lequel les verrous 6 d'ancrage peuvent venir prendre appui et assurer la fixation du siège dans la direction Z verticale du véhicule.

Dans l'exemple montré, on peut voir que la glissière 3 est formée par pliage d'une unique tôle. La glissière 3 pourrait également être obtenue par extrusion.

Pour réaliser le blocage du siège dans la direction axiale X, il est prévu une série de lumières 23 rectangulaires dans au moins l'une des parois de la glissière 3.

Le dispositif d'ancrage arrière, que l'on voit à la figure 2, possède un organe de détection 16 de la présence de la glissière 3.

Il importe, en effet, lorsque le siège doit être mis en place dans une glissière 3, que chacun des dispositifs d'ancrage 1a et 1 b soit dans sa configuration rétractée de telle sorte que les verrous 6 puissent s'insérer dans la glissière 3 et puissent ensuite prendre leur position engagée et assurer alors la fixation du siège par rapport au véhicule.

Pour cela, il est prévu un organe de détection 16 de présence de la glissière 3 qui se présente sous la forme d'une pièce mobile sollicitée en rotation par un moyen élastique tel qu'un ressort 19.

Cet organe de détection 16 présente une forme générale en L avec une tête 17 et un talon 18 séparée par un pivot 21.

La tête 17 vient bloquer l'actionneur 11 en position de déverrouillage dans laquelle l'actionneur 11 maintient les verrous 6 dans leur position rétractée.

On rappelle que la position rétractée des verrous 6 est la position dans laquelle ils sont rapprochés les uns des autres.

Le blocage de l'actionneur 11 en position de déverrouillage est réalisé par la tête 17 qui coopère avec un taquet excentrique. Le taquet excentrique 20 possède un méplat. L'actionneur 11 est bloqué par l'organe de détection qui est poussé par le ressort 19 dont la tête 17 s'appuie contre le méplat du taquet excentrique 20.

Lors de l'accostage du siège sur la glissière 3, le talon 18 de l'organe de détection 16 vient s'appuyer sur une des ailes d'ancrage 14 de la glissière. De ce fait, l'organe de détection 16 pivote et échappe du taquet excentrique 20. L'actionneur 11 n'est plus contraint par l'organe de détection 16 et pivote jusqu'à une position illustrée, par exemple, à la figure 5. Ce pivotement est réalisé par des moyens élastiques tels qu'un ressort19.

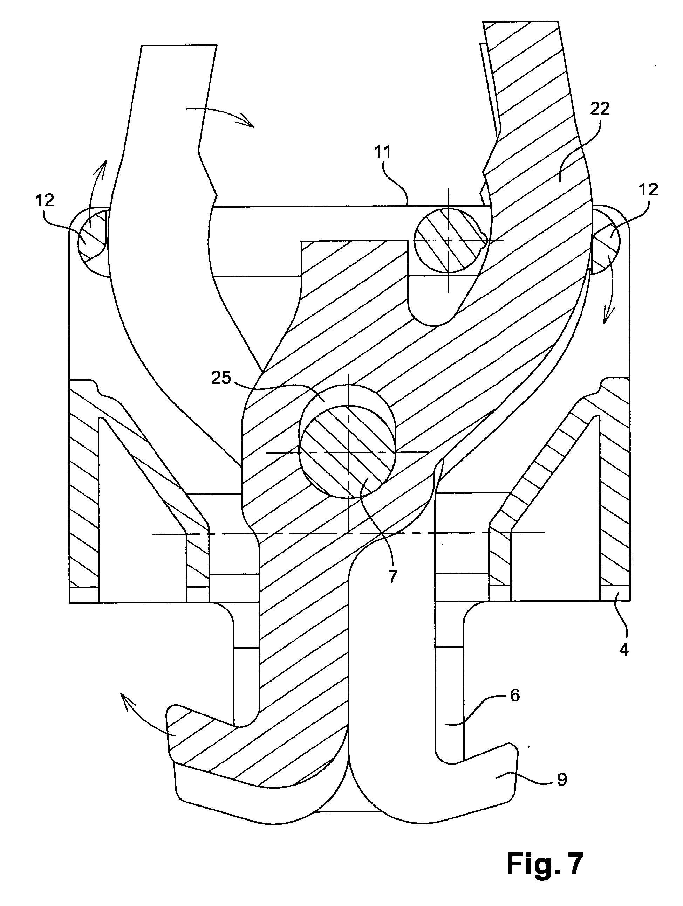

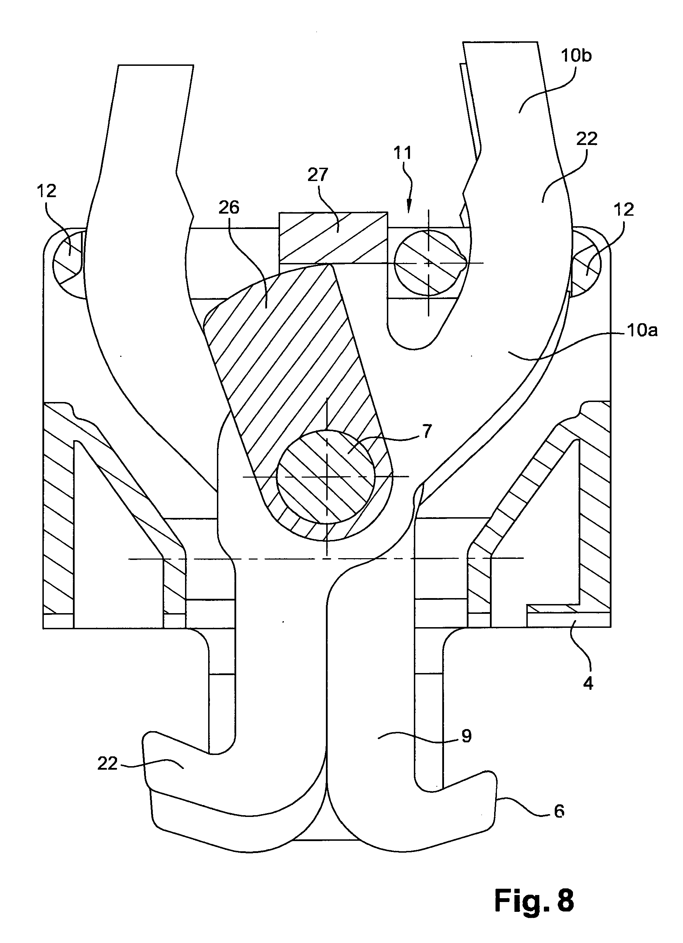

On peut ensuite se reporter aux figures 7 à 9 qui montrent l'autre fonction qui est portée par le dispositif de verrouillage arrière, cette fonction étant d'assurer un rattrapage de jeu.

En effet, du fait des inévitables dispersions de fabrication, il peut se produire un jeu entre les verrous 6 et l'aile d'ancrage 14.

Ce jeu peut générer des bruits qui doivent être combattus.

Pour cela, le dispositif de verrouillage 1 peut être doté d'un verrou spécifique dit de rattrapage de jeu. Ce verrou de rattrapage de jeu 22 est monté, tout comme les verrous 6 de chacune des deux séries I et II, sur l'arbre 7.

La spécificité du verrou de rattrapage de jeu 22 réside dans le fait qu'il possède un degré de liberté dans la direction verticale Z. Pour cela, le verrou de rattrapage de jeu 22 présente un alésage oblong 25 par lequel le verrou de rattrapage de jeu 22 est engagé sur l'arbre 7, comme cela apparaît à la figure 7.

Le déplacement du verrou de rattrapage de jeu 22 sur la course relativement réduite qui est délimité par l'alésage oblong 25 se fait par une came 26 rotative qui coopère avec un épaulement 27.

L'épaulement est ménagé dans le verrou de rattrapage 22 dans sa partie supérieure. Lors de la rotation de la came 26, celle-ci vient en appui sur l'épaulement 27 et tracte le verrou de rattrapage de jeu 22 dans la direction verticale Z. Ainsi, le verrou de rattrapage de jeu 22 vient se plaquer contre l'aile d'ancrage 14 de la glissière 3 en absorbant les éventuels jeux.

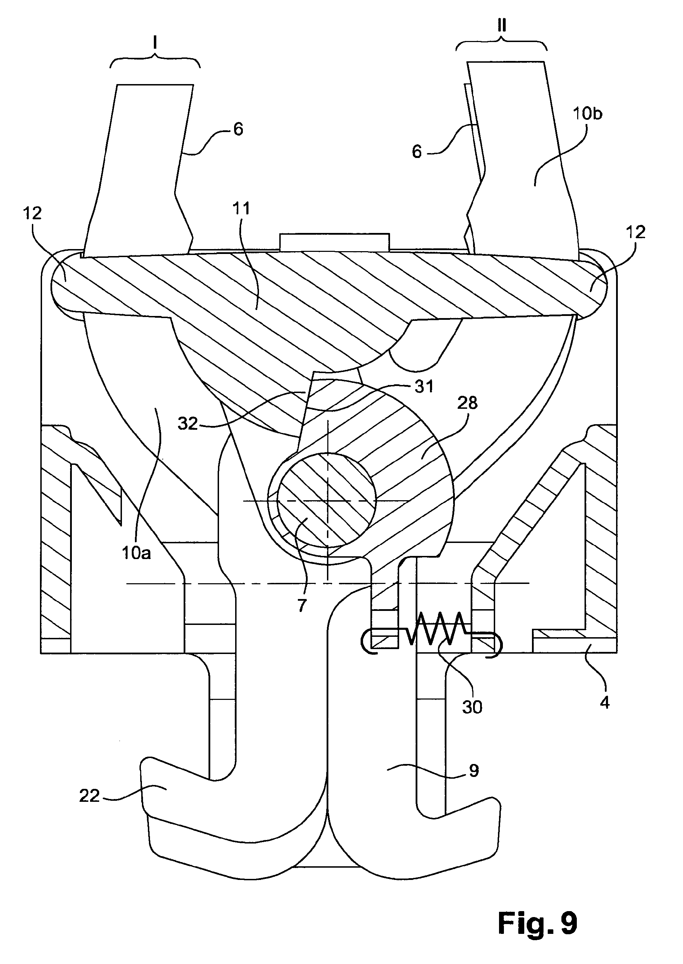

La figure 9 montre la manière avec laquelle la came 26 rotative peut être commandée. Il peut être prévu de placer sur l'arbre 7 une bague 28 qui est solidaire de la came 26. La bague 28 est sollicitée en rotation par un ressort de traction 30 lié au carter 4.

Comme représenté sur la figure 9, la bague 28 comprend un méplat 31 sur lequel vient s'appuyer un méplat 32 complémentaire ménagé dans l'actionneur 11.

En revenant à la figure 1, on peut voir que les deux dispositifs d'ancrage 1 sont disposés en tandem et sont reliés par une tringle 35 qui connecte les deux actionneurs 11.

Les deux actionneurs 11 sont ainsi liés l'un à l'autre et peuvent être commandés par une palette qui dépasse au niveau de la partie avant du siège.

La commande de l'ancrage et des ancrages de siège est réalisée, dans l'exemple représenté par une palette qui est commandée de manière manuelle. Il pourrait tout à fait être envisagé d'embarquer une motorisation électrique pour réaliser cette opération.

Pour faciliter la mise en place du siège et son positionnement par rapport aux glissières en phase d'approche, il peut être prévu, comme cela apparaît sur la figure 1, que le flasque latéral soit doté d'éléments de centrage 36 qui entrent dans la glissière 3. Ces éléments de centrage 36 peuvent être légèrement coniques pour faciliter le positionnement du siège.

## Revendications

1. Dispositif d'ancrage d'un siège automobile dans une glissière (3) fixée dans le plancher d'un véhicule, la glissière (3) présentant une première et une seconde paroi parallèle et une première et une seconde aile d'ancrage (14) surmontant respectivement la première paroi et la seconde paroi et débordant vers l'intérieur de la glissière (3),
le dispositif comprenant un arbre (7) sur lequel sont montées une première série I de verrous (6) mobiles en rotation dans un premier sens, et une seconde série II de verrous (6) mobiles en rotation dans un sens opposé,
les première et seconde séries I et II de verrous (6) étant imbriquées de sorte que deux verrous (6) successifs passent d'un état rétracté dans lequel les deux verrous (6) sont sensiblement superposés à un état engagé dans lequel le premier verrou s'engage contre la première aile d'ancrage (14) et le second verrou s'engage contre la seconde aile d'ancrage (14), **caractérisé en ce que** chaque verrou (6) présente un crochet d'ancrage (9) et une queue de commande (10) ayant une partie proximale (10a) et une partie distale (10b), séparés par un perçage recevant l'arbre (7) et **en ce qu'**un actionneur (11) agit sur les queues de commande de chaque verrou pour faire pivoter dans un sens, la première série de verrous (6) d'une position de verrouillage vers l'état rétracté et, dans un sens opposé, la deuxième série de verrous (6) d'une position de déverrouillage vers l'état rétracté.

2. Dispositif d'ancrage selon la revendication 1, **caractérisé en ce que** l'actionneur (11) présente un axe de rotation et une première et une seconde tige parallèle audit axe de rotation (5) reliées rigidement à l'axe, la première tige venant se placer contre la partie proximale (10a) de la queue de commande (10) des verrous (6) de la première série de verrous (6) et la seconde tige venant se placer contre la partie distale (10b) de la queue de commande (10) de la seconde série de verrous (6).

3. Dispositif d'ancrage selon la revendication 2, **caractérisé en ce que** le dispositif d'ancrage comprend un verrou de rattrapage de jeu (22) possédant un alésage oblong (25) lui permettant une course dans une direction verticale.

4. Dispositif d'ancrage selon la revendication 3, **caractérisé en ce que** le verrou de rattrapage de jeu (22) comprend un épaulement (27) contre lequel vient s'appuyer une came (26) lorsque la première et la seconde série de verrous (6) atteignent l'état engagé.

5. Dispositif d'ancrage selon la revendication 4, **caractérisé en ce que** la came (26) est assujettie à une bague (28) présentant un méplat (31) contre lequel vient en appui un méplat (32) complémentaire ménagé dans l'actionneur (11) lorsque la première et la seconde séries de verrous (6) atteignent l'état engagé.

6. Dispositif d'ancrage selon l'une des revendications 1 à 5, **caractérisé en ce qu'**il présente un organe de détection (16) d'engagement dans une glissière (3), mobile entre une position dans laquelle ledit organe de détection (16) bloque l'actionneur (11) dans l'état rétracté et une position dans laquelle l'organe de détection (16) dégage l'actionneur (11) pour autoriser les verrous (6) à prendre leur état d'engagement.

7. Dispositif d'ancrage selon la revendication 6, **caractérisé en ce que** l'organe de détection (16) présente une tête (17) destinée à coopérer avec un taquet excentrique (20) embarqué sur l'actionneur (11) en vue de bloquer l'actionneur (11) dans l'état rétracté des verrous (6) et présente un talon (18) conçu pour faire pivoter l'organe de détection (16) lors de l'accostage du dispositif d'ancrage contre une aile d'ancrage (14) et pour faire échapper le tête (17) du taquet excentrique (20).

8. Dispositif d'ancrage selon l'une des revendications 1 à 7, **caractérisé en ce que** les crochets d'ancrage d'au moins une série de verrous (6) présentent à leur extrémité un doigt apte à s'insérer dans une ouverture pratiquée dans une paroi de la glissière (3).

9. Siège de véhicule **caractérisé en ce qu'**il comprend deux dispositifs d'ancrage (1 a, 1 b), selon l'une des revendications 1 à 8, placés en tandem, sur au moins un des deux côtés du siège.

10. Siège de véhicule selon la revendication 9, **caractérisé en ce qu'**une tringle (35) relie les actionneurs des deux dispositifs placés en tandem.

## Patentansprüche

1. Vorrichtung zur Verankerung eines Fahrzeugsitzes in einer Gleitschiene (3), die im Boden eines Fahrzeugs befestigt ist, wobei die Gleitschiene (3) eine erste und eine zweite parallele Wand und einen ersten und einen zweiten Verankerungsflügel (14) aufweist, die jeweils die erste und die zweite Wand überragen, und ins Innere der Gleitschiene (3) überstehen,
wobei die Vorrichtung eine Welle (7) umfasst, auf der eine erste Reihe I von in eine Richtung drehbaren Riegeln (6), und eine zweite Reihe II von in die entgegengesetzte Richtung drehbaren Riegeln (6) montiert sind,
wobei die erste und die zweite Reihe I und II von Riegeln (6) derart ineinander greifen, dass die beiden aufeinanderfolgenden Riegel (6) von einem eingezogenen Zustand, in dem die beiden Riegel (6) in etwa übereinander liegen, in einen eingeführten Zustand übergehen, in dem sich der erste Riegel an den ersten Verankerungsflügel (14) anlegt und sich der zweite Riegel an den zweiten Verankerungsflügel (14) anlegt, **dadurch gekennzeichnet, dass** jeder Riegel (6) einen Verankerungshaken (9) und einen Betätigungsschaft (10) mit einem proximalen (10a) und einem distalen (10b) Abschnitt aufweist, die durch eine Bohrung getrennt sind, in der die Welle (7) aufgenommen wird, und dadurch, dass ein Aktuator (11) auf die Betätigungsschäfte eines jeden Riegels einwirkt, um die erste Reihe von Riegeln (6) von einer Verriegelungsposition in den eingezogenen Zustand schwenken zu lassen, und die zweite Reihe von Riegeln (6) in eine umgekehrte Richtung von einer Verriegelungsposition in den eingezogenen Zustand.

2. Verankerungsvorrichtung nach Anspruch 1, **dadurch gekennzeichnet, dass** der Aktuator (11) eine Drehachse und eine erste und eine zweite Stange parallel zur besagten Drehachse (5) aufweist, die fest mit der Achse verbunden sind, wobei sich die erste Stange an den proximalen Abschnitt (10a) des Betätigungsschaftes (10) der Riegel (6) der ersten Reihe von Riegeln (6) anlegt, und sich die zweite Stange an den distalen Abschnitt (10b) des Betätigungsschaftes (10) der zweiten Reihe von Riegeln (6) anlegt.

3. Verankerungsvorrichtung nach Anspruch 2, **dadurch gekennzeichnet, dass** die Verankerungsvorrichtung einen Spielausgleichsriegel (22) mit einer Langlochbohrung (25) umfasst, anhand derer er einen Weg in eine vertikale Richtung zurücklegen kann.

4. Verankerungsvorrichtung nach Anspruch 3, **dadurch gekennzeichnet, dass** der Spielausgleichsriegel (22) einen Ansatz (27) umfasst, an den sich ein Nocken (26) anlegt, wenn die erste und die zweite Reihe von Riegeln (6) den eingeführten Zustand erreichen.

5. Verankerungsvorrichtung nach Anspruch 4, **dadurch gekennzeichnet, dass** der Nocken (26) einem Ring (28) unterworfen ist, der eine Abflachung (31) aufweist, an der sich eine ergänzende Abflachung (32) anlegt, die in den Aktuator (11) eingearbeitet ist, wenn die erste und die zweite Reihe von Riegeln (6) den eingeführten Zustand erreichen.

6. Verankerungsvorrichtung nach einem der Ansprüche 1 bis 5, **dadurch gekennzeichnet, dass** sie ein Erkennungselement (16) einer Einführung in eine Gleitschiene (3) aufweist, das zwischen einer Position, in der das besagte Erkennungselement (16) den Aktuator (11) im eingezogenen Zustand blockiert, und einer Position bewegt werden kann, in der das Erkennungselement (16) den Aktuator (11) freigibt, um es den Riegeln (6) zu ermöglichen, ihren Einführungszustand einzunehmen.

7. Verankerungsvorrichtung nach Anspruch 6, **dadurch gekennzeichnet, dass** das Erkennungselement (16) ein Kopfstück (17) aufweist, das dazu bestimmt ist, mit einem exzentrischen Klotz (20) zusammenzuwirken, der im Aktuator (11) enthalten ist, um den Aktuator (11) im eingezogenen Zustand der Riegel (6) zu blockieren, und es einen Zapfen (18) aufweist, der ausgeführt ist, um das Erkennungselement (16) beim Anlegen der Verankerungsvorrichtung an einem Verankerungsflügel (14) schwenken zu lassen, und um das Kopfstück (17) aus dem exzentrischen Klotz (20) freizugeben.

8. Verankerungsvorrichtung nach einem der Ansprüche 1 bis 7, **dadurch gekennzeichnet, dass** die Verankerungshaken zumindest einer Reihe von Riegeln (6) an ihrem Ende einen Stift aufweisen, der in der Lage ist, in eine Öffnung eingeführt zu werden, die in eine Wand der Gleitschiene (3) eingearbeitet ist.

9. Fahrzeugsitz, **dadurch gekennzeichnet, dass** er zwei Verankerungsvorrichtungen (1 a, 1 b) nach einem der Ansprüche 1 bis 8 umfasst, die als Tandem auf zumindest einer der beiden Seiten des Sitzes angeordnet sind.

10. Fahrzeugsitz nach Anspruch 9, **dadurch gekennzeichnet, dass** eine Stange (35) die Aktuatoren der beiden als Tandem angeordneten Vorrichtungen verbindet.

## Claims

1. A device for anchoring a motor vehicle seat in a rail (3) secured to the floor pan of a vehicle, the rail (3) having a first and second parallel wall and a first and second anchoring wing (14) respectively surmounting the first wall and the second wall and going over the edges towards the inside of the rail (3),
the device comprising a shaft (7) on which a first set I of bolts (6) rotatably moveable in a first direction, and a second set II of bolts (6) rotatably moveable in an opposite direction are mounted,
the first and second sets I and II of bolts (6) being nested such that two successive bolts (6) pass from a retracted state in which the two bolts (6) are substantially superimposed, to an engaged state in which the first bolt engages against the first anchoring wing (14) and the second bolt engages against the second anchoring wing (14), **characterized in that** each bolt (6) has an anchoring hook (9) and a control tail (10) having a proximal part (10a) and a distal part (10b), separated by a drilling receiving the shaft (7) and **in that** an actuator (11) acts on the control tails of each bolt to make the first set of bolts (6) pivot in one direction, from a bolting position to the retracted state, and the second set of bolts (6) pivot in the opposite direction, from an unbolting position to the retracted state.

2. The anchoring device according to claim 1, **characterized in that** the actuator (11) has an axis of rotation and a first and second rod parallel to said axis of rotation (5) stiffly connected to the axis, the first rod being placed against the proximal part (10a) of the control tail (10) of the bolts (6) of the first set of bolts (6) and the second rod being placed against the distal part (10b) of the control tail (10) of the second set of bolts (6).

3. The anchoring device according to claim 2, **characterized in that** the anchoring device comprises a clearance compensation bolt (22) having an oblong bore (25) allowing it to travel in a vertical direction.

4. The anchoring device according to claim 3, **characterized in that** the clearance compensation bolt (22) comprises a shoulder (27) against which a cam (26) presses when the first and second set of bolts (6) reach the engaged state.

5. The anchoring device according to claim 4, **characterized in that** the cam (26) is subjected to a ring (28) having a flat section (31) against which bears an additional flat section (32) arranged in the actuator (11) when the first and second sets of bolts (6) reach the engaged state.

6. The anchoring device according to any of claims 1 to 5, **characterized in that** it has a member (16) for detecting the engagement in a rail (3), moveable between a position in which said detection member (16) locks the actuator (11) in the retracted state and a position in which the detection member (16) releases the actuator (11) so as to allow the bolts (11) to take their state of engagement.

7. The anchoring device according to claim 6, **characterized in that** the detection member (16) has a head (17) intended to cooperate with an eccentric cleat (20) integrated on the actuator (11) with a view to locking the actuator (11) in the retracted state of the bolts (6) and has a heel (18) designed to make the detection member (16) pivot during the leveling of the anchoring device against an anchoring wing (14) and to make the head (17) escape from the eccentric cleat (20).

8. The anchoring device according to any of claims 1 to 7, **characterized in that** the anchoring hooks of at least one set of bolts (6) have at their end a finger capable of being inserted in an opening formed in a wall of the rail (3).

9. A vehicle seat **characterized in that** it comprises two anchoring devices (1a, 1b), according to any of claims 1 to 8, placed in tandem, on at least one of the two sides of the seat.

10. The vehicle seat according to claim 9, **characterized in that** a bead wire (35) connects the actuators of the two devices placed in tandem.
